Europäisches Patentamt

European Patent Office

Office européen des brevets

(11) Publication number: **0 574 676 A1**

## EUROPEAN PATENT APPLICATION

(21) Application number: **93106618.7**

(22) Date of filing: **23.04.93**

(51) Int. Cl.5: **C08J 9/10, C08J 9/00**

(30) Priority: **15.06.92 NL 9201054**

(43) Date of publication of application:
**22.12.93 Bulletin 93/51**

(84) Designated Contracting States:
**BE DE ES FR GB IT NL**

(71) Applicant: **GENERAL ELECTRIC COMPANY**
**1 River Road**
**Schenectady, NY 12345(US)**

(72) Inventor: **Dekkers, Theodorus Adrianus Maria**
**General Electric Plastics B.V.,**
**P.O. Box 117**
**NL-4600 AC Bergen op Zoom(NL)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

(54) **Method of manufacturing a structural foam.**

(57) The invention relates to a method of manufacturing a structured foam starting from a first synthetic resin and a blowing agent, characterized in that a concentrate of the blowing agent in a second synthetic resin as a carrier is prepared by mixing an emulsion of the second synthetic resin with the blowing agent, by then isolating from the emulsion in the conventional manner an intimate mixture (concentrate) of the second synthetic resin and the blowing agent, the concentrate is then added to the synthetic resin and the whole is subjected to a moulding process at a temperature above the decomposition temperature of the blowing agent while foaming the mixture. The resulting structural foam has a low density and a finer cell structure.

For obtaining structural foams of synthetic resins, the synthetic resin is mixed with a blowing agent and is then subjected to a moulding step at a temperature which is higher than the decomposition temperature of the blowing agent. A gas is formed which produces a cell structure in the material and hence reduces the density. In general it holds that the finer the cell structure, the better are the mechanical properties.

The blowing agent is normally processed in a concentrate by dry-mixing of the synthetic resin and the blowing agent, succeeded by extrusion at highly controlled temperature, the operations having to be carried out below the decomposition temperature of the blowing agent. In some synthetic resins the extrusion has to be carried out at comparatively high temperatures of, for example, 250°C. This involves production problems.

It has been found that the blowing agent can be incorporated in a second synthetic resin at temperatures which need not exceed 50°C. The resulting concentrate may be added to the synthetic resin and the desired structural foam is obtained with decomposition of the blowing agent.

According to the invention, the above-mentioned production problems in processing the blowing agent are overcome and a reduction of the specific gravity of the structural foam which is important in practice is obtained, which results in a considerable cost saving. Moreover, the method according to the invention provides a finer cell structure.

The method according to the invention is characterised in that a concentrate of the blowing agent in a second synthetic resin as a carrier is prepared by mixing an emulsion of the second synthetic resin with the blowing agent, by then isolating from the emulsion an intimate mixture (concentrate) of the second synthetic resin and the blowing agent in the usual manner, the concentrate is then added to the first synthetic resin and the whole is subjected to a moulding process at a temperature above the decomposition temperature of the blowing agent while foaming the mixture.

In the method according to the invention the first synthetic resin (i.e. the synthetic resin from which the structural foam is manufactured) and the second synthetic resin (i.e. the synthetic resin which is used as a carrier in the concentrate) may be equal or different.

The method according to the invention is suitable for preparing a structural foam of all possible types of synthetic resins. The method is particularly suitable for synthetic resins which have to be extruded at comparatively high temperatures, for example, aromatic polycarbonates, polyphenylene ether, polyalkylene phthalates, ABS resins or polymer mixtures which comprise one or more of the polymers just mentioned. In combination with the synthetic resins just mentioned, it is recommendable in particular to use as a carrier (second synthetic resin) a polymer or copolymer which comprises units derived from a vinylaromatic polymer, for example, styrene. Poly(styrene-methacrylate) copolymers are particularly suitable as a carrier.

An advantage of poly(styrene-methylacrylate) copolymers is that in general they have a lower viscosity than, for example, polycarbonates. As a result of this property and due to the easy dissolution of poly-(styrene-methylacrylate) in many synthetic resins, this material is an excellent carrier for obtaining a homogeneous dispersion of the blowing agent in the melt. As a result of this a finer cell structure and a lower density are obtained.

For example, 5-phenyltetrazole or azobiscarbonamide may be used as a blowing agent.

The concentration of the blowing agent in the carrier, for example, in the poly(styrene-methylacrylate), varies within a wide range and may be, for example, from approximately 15 to 35% by weight; this concentration is preferably approximately 20-30% and even more prefarably approximately 25%.

## EXAMPLE 1

A blowing agent (5-phenyltetrazole) was mixed at ambient temperature with an emulsion of poly-(styrene-methylacrylate) in such a mixing ratio that after isolation of the solid a concentrate with 25% by weight of the blowing agent was obtained. The resulting concentrate was added to a polycarbonate using 6% of glass as a filler.

Furthermore an extrudate was prepared by extruding 8.5% by weight of the same blowing agent with a mixture of the same polycarbonate using 6% of glass as a filler.

This latter concentrate was obtained by dry-mixing and extruding with a double blade Werner-Pfleiderer extruder, the melting-temperature being kept below 250°C; the resulting strands were chopped up to granulate.

The concentrate according to the invention was added to the polycarbonate (with 6% glass) in a quantity of 1% by volume, the second concentrate obtained by extrusion was added in a quantity of 3% by volume.

The addition of the first and the second concentrates to the polycarbonate took place by providing the glass-filled polycarbonate in the supply system of an injection moulding machine. The mixture according to the invention comprising 25% of blowing agent and the concentrate comprising 8.5% blowing agent, respectively, were added to the polycarbonate, injection-moulding being carried out and a cover of a fuse box being formed. The cylinder temperature was 285°C.

A moulded cover having a weight of 2.56 kg was obtained by using the method according to the invention. The cover with the same volume obtained under comparable circumstances but starting from the second concentrate had a weight of 2.82 kg. The first-mentioned cover showed a finer cell structure. In all other aspects the two covers were entirely comparable.

## EXAMPLE 2

Concentrate A: 8.5% by weight of 5-phenyltetrazole in polycarbonate (for comparison).

5-Phenyltetrazole was mixed with a polycarbonate powder (having an average molecular weight of 18,000) and the mixture was then extruded in a double-blade Werner-Pfleiderer extruder, the melting temperature being kept below 250°C. The resulting strands were chopped up to granulate.

Concentrate B: 25% by weight of 5-phenyltetrazole in poly(styrene-methacrylate).

5-Phenyltetrasole was mixed at ambient temperature with a poly(styrene-methylacrylate) emulsion. The solid in the form of a concentrate was isolated therefrom in the usual manner. The resulting powdered concentrate comprises 50% by weight of 5-phenyltetrazole; for practical reasons (the lowest dosing volume on the injection moulding machine is 1% by volume) this mixture was mixed in a ratio 1 : 1 with the same polycarbonate powder as used in the preparation of concentrate A. So the resulting concentrate B comprised 25% by weight of 5-phenyltetrazole.

Injection moulding was carried out in the same manner and under the same conditions as in example 1 and in this case also a cover for a fuse box was manufactured. 3 Different experiments as recorded in the table below were carried out.

Experiment No.:

| Ingredients | 1 | 2 | 3 |
|---|---|---|---|
| Polycarbonate filled with 6 wt.% of glass (% by vol.) | 97 | 99.5 | 95 |
| Concentrate A (% by vol.) | 3 | – | 5 |
| Concentrate B (% by vol.) | – | 0.5 | – |
| ------------------------------------------------- | | | |
| Final concentration 5-PT*: | 0.25% | 0.25% | 0.43% |

* 5-PT = 5-phenyltetrazole

Results:

| | | | |
|---|---|---|---|
| Weighed product in kg | 2.80 | 2.56 | 2.80 |
| Specific density | 0.9 | 0.82 | 0.9 |
| Cell structure and surface | irregular | regular | irregular |

In experiment No. 2 (according to the invention) a better final product was obtained with a better cell structure and a lower specific gravity. When using higher concentrations of blowing agent (experiment 3) the known method was not successful either in matching the results of the method according to the invention.

**Claims**

1. A method of manufacturing a structural foam of a first synthetic resin and a blowing agent, characterised in that a concentrate of the blowing agent in a second synthetic resin as a carrier is prepared by mixing an emulsion of the second synthetic resin with the blowing agent, by then isolating from the emulsion an intimate mixture (concentrate) of the second synthetic resin and the blowing agent in the usual manner, the concentrate is then added to the synthetic resin and the whole is subjected to a moulding process at a temperature above the decomposition temperature of the blowing agent while foaming the mixture.

2. A method as claimed in Claim 1, characterised in that the first and the second synthetic resin are equal to each other.

3. A method as claimed in Claim 1, characterised in that the first and the second synthetic resin are different.

4. A method as claimed in Claim 1, characterised in that the second synthetic resin is a poly(styrene-methacrylate)copolymer.

4

**5.** A method as claimed in Claim 1, characterised in that the first synthetic resin is an aromatic polycarbonate.

**6.** A method as claimed in Claim 1, characterised in that the first synthetic resin is a polyphenylene ether resin.

**7.** A method as claimed in Claim 1, characterized in that the first synthetic resin is an ABS resin.

**8.** A method as claimed in Claim 1, characterised in that 5-phenyltetrazole is used as a blowing agent.

**9.** A method as claimed in Claim 1, characterised in that the moulding process used is an injection moulding process.

**10.** A method as claimed in Claim 4, characterised in that a concentration of approximately 15-35% of blowing agent is used in the styrene-methylmethacrylate copolymer.

**11.** A method as claimed in Claim 4, characterized in that a concentration of approximately 20-30% of blowing agent is used in the styrene-methylmethacrylate copolymer.

**12.** A method of preparing a concentrate of a blowing agent and a synthetic resin, characterized in that the blowing agent is mixed with an emulsion of the synthetic resin and an intimate mixture ( = concentrate) of the synthetic resin and the blowing agent is isolated from the resulting emulsion in the conventional manner.

**13.** A method as claimed in Claim 12, characterized in that an emulsion of a poly(styrene-methacrylate) copolymer is used.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATABASE WPIL<br>Week 8503, 29 November 1984<br>Derwent Publications Ltd., London, GB;<br>AN 015056<br>& JP-A-59 210 956 (TOYO BOSEKI K.K.)<br>* abstract *<br>* Zie ook de "PAJ" résumé en de "Chemical abstract" Nr 102(18)150382 * | 1-13 | C08J9/10<br>C08J9/00 |
| A | DATABASE WPIL<br>Week 8539, 15 August 1985<br>Derwent Publications Ltd., London, GB;<br>AN 239402<br>& JP-A-60 155 243 (TOYO BOSEKI K.K.)<br>* abstract *<br>* Zie ook de "PAJ" résumé en de "Chemical Abstract" Nr 104(16)130818z * | 1-13 | |
| A | DATABASE WPIL<br>Week 8718, 31 March 1987<br>Derwent Publications Ltd., London, GB;<br>AN 127117<br>& JP-A-62 070 429 (DAINICHI COLOR & CHEM. MFG. CO. LTD.)<br>* abstract *<br>* Zie ook de "PAJ" résumé * | 1-13 | TECHNICAL FIELDS SEARCHED (Int. Cl.5)<br><br>C08J |
| A | FR-A-2 237 748 (GENERAL ELECTRIC CO. LTD.)<br>* claims 1-16 * | 1-13 | |

The present search report has been drawn up for all claims

| Place of search | Date of completion of the search | Examiner |
|---|---|---|
| THE HAGUE | 14 SEPTEMBER 1993 | OUDOT R. |

EPO FORM 1503 03.82 (P0401)